# EUROPÄISCHE PATENTSCHRIFT

(11) **EP 4 476 082 B1**
(45) Veröffentlichungstag und Bekanntmachung des Hinweises auf die Patenterteilung: **14.01.2026**
(21) Anmeldenummer: 22822929.0
(22) Anmeldetag: 28.11.2022
(51) Int. Cl.: B60H 1/00

(54) **VERFAHREN ZUM BETREIBEN EINES KÄLTEMITTELKREISES UND KRAFTFAHRZEUG**
METHOD FOR OPERATING A COOLANT CIRCUIT, AND MOTOR VEHICLE
PROCÉDÉ DE FONCTIONNEMENT D'UN CIRCUIT DE REFROIDISSEMENT ET VÉHICULE À MOTEUR

(30) Priorität: 09.02.2022 DE 102022102986
(43) Veröffentlichungstag der Anmeldung: 18.12.2024
(73) Patentinhaber: Audi AG, 85057 Ingolstadt (DE)
(72) Erfinder: SCHROEDER, Dirk, 85077 Manching (DE); STRASSER, Klaus, 85072 Eichstätt (DE)
(86) Internationale Anmeldenummer: PCT/EP2022/083468
(87) Internationale Veröffentlichungsnummer: WO 2023/151844

(56) Entgegenhaltungen:
- CN-A- 113 479 032
- DE-A1- 102017 109 862
- DE-A1- 102017 112 003
- DE-B3- 102019 131 722

## Beschreibung

Die Erfindung betrifft ein Verfahren zum Betreiben eines Kältemittelkreises für ein Kraftfahrzeug, bei welchem eine Steuerungseinrichtung aus einer eine Vielzahl von Funktionsbausteinen enthaltenden Funktionsbibliothek Funktionsbausteine auswählt, welche jeweiligen Komponenten des Kältemittelkreises zugeordnet sind. Des Weiteren betrifft die Erfindung ein Kraftfahrzeug mit einem Kältemittelkreis und einer Steuerungseinrichtung.

Bei der Konzeption und Fertigung von Kältemittelkreisen für Kraftfahrzeuge werden üblicherweise je nach Aufbau des jeweiligen Kältemittelkreises, den Verschaltungsmöglichkeiten eines solchen Kältemittelkreises und je nach verwendetem Kältemittel Softwarebausteine oder Funktionsbausteine entwickelt, welche den einzelnen Komponenten und den anwählbaren Systemkonfigurationen oder Verschaltungsmöglichkeiten des Kältemittelkreises zugeordnet sind. Die Verwendung unterschiedlicher Kältemittel geht hierbei mit der Entwicklung voneinander abweichender Funktionen einher. Daher ist eine derartige Entwicklung mit einem hohen Zeitaufwand und Kostenaufwand verbunden. Es sind nämlich je nach verwendetem Kältemittel und je nach vorhandenen Komponenten des Kältemittelkreises, deren Anordnung im Kältemittelkreislauf und der anwählbaren Systemkonfigurationen des Kältemittelkreises unterschiedliche Funktionen zu entwickeln. Dies ist nachteilig in Hinsicht auf Funktionsvarianten, Zeitaufwand und Kosten.

Die US 2018/0135877 A1 beschreibt eine kundenspezifische Anpassung einer Klimaanlage unter Verwendung einer Datenbank, in welcher Betriebsparameter und Steuerungsparameter von Anlageneinheiten enthalten sind.

Die EP 0 221 618 A1 beschreibt eine Kälteanlage mit einer Anwendungssoftware zum Steuern der Kälteanlage. Wenn eine neue Anlage hergestellt wird, werden Programme aus einer Programmbibliothek verwendet, welche einzelne Komponenten der Anlage und mögliche Formen einer Steuerung derselben betreffen.

Ein weiteres Verfahren zur Steuerung des Klimas in einem Gebäudebereich oder Anlagenbereich ist in der DE 100 13 447 C1 beschrieben.

Aufgabe der vorliegenden Erfindung ist es, ein Verfahren der eingangs genannten Art anzugeben, welches eine aufwandsarme und flexible Anpassung an Änderungen des Kältemittelkreises ermöglicht, und ein entsprechendes Kraftfahrzeug zu schaffen.

Das Dokument CN 113 479 032 A zeigt ein Verfahren in dem eine Steuerungseinrichtung aus einer eine Vielzahl von Funktionsbausteinen enthaltenden Funktionsbibliothek Funktionsbausteine auswählt.

Diese Aufgabe wird durch ein Verfahren mit den Merkmalen des Patentanspruchs 1 und durch ein Kraftfahrzeug mit den Merkmalen des Patentanspruchs 10 gelöst. Vorteilhafte Ausgestaltungen mit zweckmäßigen Weiterbildungen der Erfindung sind in den abhängigen Patentansprüchen und in der nachfolgenden Beschreibung angegeben.

Bei dem erfindungsgemäßen Verfahren zum Betreiben eines Kältemittelkreises für ein Kraftfahrzeug wählt eine Steuerungseinrichtung aus einer eine Vielzahl von Funktionsbausteinen enthaltenden Funktionsbibliothek Funktionsbausteine aus. Die Funktionsbausteine sind jeweiligen Komponenten des Kältemittelkreises zugeordnet. Die Steuerungseinrichtung aktiviert hierbei für das Betreiben des Kältemittelkreises lediglich diejenigen in der Funktionsbibliothek enthaltenen Funktionsbausteine, welche in dem zu betreibenden Kältemittelkreis tatsächlich vorhandenen Komponenten und/oder tatsächlich vorgesehenen Verschaltungsmöglichkeiten des Kältemittelkreises zugeordnet sind. Demgegenüber deaktiviert die Steuerungseinrichtung diejenigen in der Funktionsbibliothek enthaltenen Funktionsbausteine, welche optional verwendbaren, aber in dem zu betreibenden Kältemittelkreis nicht vorhandenen Komponenten und/oder im Betrieb des Kältemittelkreises nicht vorgesehenen Verschaltungen des Kältemittelkreises zugeordnet sind.

Die Verschaltungsmöglichkeiten des Kältemittelkreises können auch als Systemkonfigurationen bezeichnet werden und beschreiben jeweilige Betriebsweisen des Kältemittelkreises, welche basierend auf den tatsächlich vorhandenen Komponenten des Kältemittelkreises realisiert werden können. Bei den im Betrieb des Kältemittelkreises nicht vorgesehenen Verschaltungen des Kältemittelkreises handelt es sich demnach um nicht darstellbare oder im tatsächlichen Betrieb des Kältemittelkreises nicht vorgesehene Systemkonfigurationen.

Sofern nicht ein Kältemittelkreis maximaler Komplexität zum Einsatz kommt, werden von der Steuerungseinrichtung folglich in der Funktionsbibliothek enthaltene Funktionsbausteine gar nicht aktiviert. Vielmehr werden nur diejenigen, insbesondere als Softwarebausteine ausgebildeten, Funktionsbausteine aktiviert und somit in die Steuerung des Kältemittelkreises einbezogen, welche den in dem zu betreibenden Kältemittelkreis tatsächlich vorhandenen Komponenten zugeordnet sind und welche tatsächlich darstellbare oder vorgesehene Verschaltungsmöglichkeiten beziehungsweise Systemkonfigurationen abbilden. Die Funktionsbibliothek kann daher eine Mehrzahl von zwar nicht genutzten oder nicht aktivierten, aber in der Funktionsbibliothek vorhandenen oder vorgehaltenen Funktionsbausteinen enthalten.

Das Verfahren ermöglicht eine aufwandsarme und flexible Anpassung an Änderungen des Kältemittelkreises. Denn wenn in den zu betreibenden Kältemittelkreis wenigstens eine weitere Komponente hinzugenommen werden soll, oder wenn eine bestehende Komponente durch die weitere Komponente ersetzt werden soll, braucht lediglich der dieser weiteren Komponente zugeordnete Funktionsbaustein und/oder der wenigstens einer zusätzlich möglichen oder vorgesehenen Verschaltung oder Systemkonfiguration des Kältemittelkreises zugeordnete Funktionsbaustein aktiviert zu werden, damit auch dieser Funktionsbaustein im Betrieb des Kältemittelkreises genutzt werden kann.

Selbst wenn in dem Kältemittelkreis unterschiedliche Kältemittel zum Einsatz kommen, so basiert der Betrieb des Kältemittelkreises auf gleichen Funktionen. Denn es brauchen lediglich diejenigen Funktionsbausteine oder Softwarebausteine aktiviert zu werden, welche beim Einsatz des jeweiligen Kältemittels zum Tragen kommen.

Die einzelnen Funktionsbausteine können in ihrer Grundausführung unabhängig von einem jeweiligen Kältemittel entwickelt und ausgearbeitet werden. Ein Stoffdatenbezug beziehungsweise Kältemittelbezug kann über separate Kältemitteldatensätze mit in das Gesamtkonstrukt beziehungsweise den Betrieb des Kältemittelkreises einfließen.

Der Kältemittelkreis ist daher so ausgestaltet, dass er unabhängig vom eingesetzten Kältemittel auf dieselbe Funktionsbeschreibung zurückgreifen kann, welche in der Funktionsbibliothek enthalten ist. Dies geht mit einem verringerten Entwicklungsaufwand einher. Denn es ist lediglich die allgemeingültige Funktionsbibliothek nach Art einer Zentralfunktion bereitzustellen, wobei nur die für das Betreiben des Kältemittelkreises und den damit abbildbaren Verschaltungen oder Systemkonfigurationen erforderlichen Funktionsbausteine aktiviert werden. Nicht erforderliche Funktionen oder Funktionsbausteine werden demgegenüber deaktiviert oder ausgeblendet, sodass lediglich die für den jeweiligen Aufbau des Kältemittelkreises heranzuziehenden Funktionalitäten greifen.

Die große, umfassende Funktionsbibliothek enthält sämtliche Funktionsumfänge auch eines sehr komplexen Kältemittelkreises etwa in Form einer maximalen Ausbaustufe des Kältemittelkreises. Ausgehend von dieser maximalen Ausbaustufe mit den jeweils möglichen Verschaltungen oder Systemkonfigurationen kann die Funktionsentwicklung sehr einfach auf das jeweilige System beziehungsweise den jeweiligen Kältemittelkreis nach dem Drop-Down-Prinzip heruntergebrochen werden, da lediglich die tatsächlich zu nutzenden Funktionsbausteine bei einer dann reduzierten Anzahl an Verschaltungen oder Systemkonfigurationen zu aktivieren sind. Des Weiteren kann in vorteilhafter Weise die Systemarchitektur, also der Aufbau des Kältemittelkreises, sehr leicht abhängig von dem mit dem jeweiligen Kältemittelkreis zu bestückenden Kraftfahrzeug nach oben skaliert oder nach unten skaliert werden.

Dies geht insbesondere mit einem verringerten Aufwand einher, da nicht für jeden Kältemittelkreis eine softwareseitige Systementwicklung vorgenommen zu werden braucht. Vielmehr kann einfach auf die ohnehin bereits in der Funktionsbibliothek enthaltenen Funktionsbausteine zurückgegriffen zu werden. Folglich ergibt sich eine Ersparnis von Zeit und Geld.

Für die Verwendung in einem konkreten Anwendungsfall ist also zunächst lediglich der von dem verwendeten Kältemittel unabhängige Funktionsbaustein zu entwickeln, der seinerseits eine bestimmte Aufgabe innerhalb einer vorab festgelegten Verschaltung des Kältemittelkreises oder Systemkonfigurationen zu erfüllen hat. Der Aufwand für eine Applikation durch Vorgabe von Werten, welche durch den jeweiligen Funktionsbaustein zu verarbeiten sind, ist an diesen einheitlichen Funktionsbaustein gekoppelt.

Die Funktionsbausteine sind in der Funktionsbibliothek insbesondere unabhängig vom tatsächlich verwendeten Kältemittel vorgehalten. Jedoch sind die von den Funktionsbausteinen verarbeiteten Werte abhängig von dem in dem Kältemittelkreis tatsächlich verwendeten Kältemittel. Ein Eingriff ist daher allenfalls applikationsseitig vorzunehmen, indem den Funktionsbausteinen die zu verarbeiteten Werte zur Verfügung gestellt werden, welche insbesondere von dem in dem Kältemittelkreis verwendeten Kältemittel abhängen können.

Die Funktionsbausteine oder Softwarebausteine können insbesondere Anweisungen für den Betrieb der jeweiligen Komponente des Kältemittelkreises beziehungsweise für eine jeweilige Verschaltung oder Systemkonfiguration des gesamten Kältemittelkreises enthalten.

In vorteilhafter Weise können Funktionsbausteine für einen mit dem Kältemittelkreis im Betrieb in Wärme übertragender Weise zusammenwirkenden Kühlmittelkreis unverändert bleiben.

Die in dem Kältemittelkreis tatsächlich vorhandenen Komponenten sind vorzugsweise im Hinblick auf ihre Festigkeit so ausgelegt, dass sie den im Betrieb des Kältemittelkreises auftretenden Anforderungen standhalten, wobei insbesondere für das jeweils verwendete Kältemittel spezifische Vorgaben berücksichtigt werden.

Vorzugsweise werden im Betrieb des Kältemittelkreises von dem durch die Steuerungseinrichtung aktivierten Funktionsbausteinen Werte verarbeitet, welche Eigenschaften eines tatsächlich in dem Kältemittelkreis vorhandenen Kältemittels berücksichtigen. So können sehr einfach spezifische, das jeweilige Kältemittel betreffende Größen appliziert werden. Dies geht mit einem vergleichsweise geringen Applikationsaufwand einher. Insbesondere kann hierbei eine dem jeweiligen Kältemittel zugeordnete Stoffdatenbibliothek genutzt werden.

Vorzugsweise wird durch die Steuerungseinrichtung für das Betreiben des Kältemittelkreises ein Funktionsbaustein aktiviert, welcher einem auf einer Niederdruckseite des Kältemittelkreises angeordneten Kältemittelspeicher zugeordnet ist. Eine derartige Positionierung des Kältemittelspeichers, in welchem insbesondere eine Trennung von flüssigem Kältemittel und gasförmigem Kältemittel sowie vorzugsweise eine Einlagerung oder Auslagerung von Kältemittel stattfindet, ist insbesondere dann vorteilhaft, wenn in dem Kältemittelkreis ein transkritisches Kältemittel zum Einsatz kommt, also ein Kältemittel, welches in dem Kältemittelkreis zeitweise in unterkritischen und zeitweise in überkritischen Zuständen vorliegen kann.

Demgegenüber ist bei Verwendung eines unterkritisch arbeitenden beziehungsweise im Betrieb des Kältemittelkreises lediglich unterkritische Zustände aufweisenden Kältemittels die Anordnung des Kältemittelspeichers auf einer Hochdruckseite des Kältemittelkreises vorteilhafter. In einer Ausgestaltung, bei welcher in einen Kondensator des Kältemittelkreises eine Unterkühlstrecke integriert ist, kann für eine besonders günstige Bereitstellung dieser Funktion der Kältemittelspeicher zwischen einer Kondensationsstrecke des Kondensators und der Unterkühlstrecke in den Kondensator integriert sein. Dies macht das Vorsehen eines Kältemittelspeichers auf der Niederdruckseite überflüssig.

Des Weiteren kann ein derartiger Kältemittelkreis ein Expansionsorgan aufweisen, mittels welchem sich stromabwärts eines Verdampfers des Kältemittelkreises ein Betriebszustand mit überhitztem Kältemittel einstellen lässt. Wenn dann das unterkritische Kältemittel auf der Niederdruckseite des Kältemittelkreises lediglich in der Gasphase vorliegt, so kann in dem Kältemittelspeicher keine Abtrennung von flüssigem Kältemittel vorgenommen werden.

Vorliegend wird dennoch vorzugsweise der Funktionsbaustein aktiviert, welcher dem auf der Niederdruckseite des Kältemittelkreises angeordneten Kältemittelspeicher zugeordnet ist. Denn so kann auch bei Verwendung des transkritisch arbeitenden Kältemittels in dem Kältemittelspeicher eine Abtrennung von flüssigem Kältemittel vorgenommen werden. Hierbei kann für das mindestens eine stromaufwärts wenigstens eines Verdampfers des Kältemittelkreises verbaute Expansionsorgan eine Betriebsstrategie mit einer Hochdruckregelung vorgenommen werden, welche gegenüber einer Betriebsstrategie modifiziert ist, bei welcher der Kältemittelspeicher auf der Hochdruckseite angeordnet ist.

Verläuft der Prozess für ein transkritisches arbeitendes Kältemittel aufgrund der anliegenden Systemlast jedoch unterkritisch, so kann das mindestens eine stromaufwärts des wenigstens einen Verdampfers des Kältemittelkreises verbaute Expansionsorgan eine Betriebsstrategie mit einer Unterkühlungsregelung stromabwärts des Kondensators abbilden.

Das Vorsehen des Kältemittelspeichers auf der Niederdruckseite des Kältemittelkreises ermöglicht somit eine Nutzung sowohl des transkritische Zustände aufweisenden Kältemittels als auch des lediglich unterkritische Zustände aufweisenden Kältemittels beim Betrieb des Kältemittelkreises. Dies ist im Hinblick auf eine von dem verwendeten Kältemittel weitgehend unabhängige und sehr weitgehende Vereinheitlichung des Aufbaus des Kältemittelkreises vorteilhaft.

In der Funktionsbibliothek kann ein Funktionsbaustein enthalten sein, welcher einem auf einer Hochdruckseite des Kältemittelkreises angeordneten Kältemittelspeicher zugeordnet ist. Vorzugsweise bleibt oder wird ein derartiger Funktionsbaustein vorliegend jedoch deaktiviert.

Vorzugsweise wird durch die Steuerungseinrichtung für das Betreiben des Kältemittelkreises ein Funktionsbaustein aktiviert, welcher einem inneren Wärmeübertrager des Kältemittelkreises zugeordnet ist. Ein derartiger innerer Wärmeübertrager sorgt für eine Erhöhung der Temperatur des einem Verdichter des Kältemittelkreises zugeführten Kältemittels und für eine zusätzliche Abkühlung des wenigstens einem Verdampfer des Kältemittelkreises zugeführten Kältemittels. Ein derartiger innerer Wärmeübertrager ist insbesondere dann im Hinblick auf die Effizienz des Kältemittelkreises vorteilhaft, wenn in dem Kältemittelkreis ein transkritisch arbeitendes Kältemittel zum Einsatz kommt.

Bei Verwendung eines im Betrieb des Kältemittelkreises lediglich unterkritische Zustände aufweisenden Kältemittels ist die Verwendung des inneren Wärmeübertrages demgegenüber eher optional.

Indem vorliegend der Kältemittelkreis den inneren Wärmeübertrager aufweist und der diesem Wärmeübertrager zugeordnete Funktionsbaustein aktiviert wird, kann sowohl das transkritische Kältemittel als auch das unterkritische Kältemittel im Betrieb des Kältemittelkreises vorteilhaft verwendet werden. Hierbei kommt in vorteilhafter Weise der durch die Steuerungseinrichtung aktivierte und dem inneren Wärmeübertrager zugeordnete Funktionsbaustein zum Einsatz. Die funktionalen Kriterien, nach denen der Kältemittelkreis arbeitet, sind somit gleich, selbst wenn in diesem Kältemittelkreis im Hinblick auf die auftretenden Zustände unterschiedliche Kältemittel verwendet werden.

Vorzugsweise werden von der Funktionsbibliothek jeweilige Funktionsbausteine für das Betreiben des Kältemittelkreises mit einem unterkritische Zustände aufweisenden Kältemittel, einem überkritische Zustände aufweisenden Kältemittel und einem Übergänge zwischen einem unterkritischen Zustand und einem überkritischen Zustand aufweisenden Kältemittel bereitgestellt. Dann werden mittels dieser Funktionsbausteine unterschiedlich arbeitende Kältemittel abgedeckt, sodass derartige Kältemittel in dem Kältemittelkreis zum Einsatz kommen können. Eine derartige Funktionsbibliothek, welche die Funktionsbeschreibungen für das in die jeweiligen Zustände versetze Kältemittel enthält, ist sehr vielseitig durch die Steuerungseinrichtung nutzbar.

Vorzugsweise wird durch die Steuerungseinrichtung lediglich der wenigstens eine dieser Funktionsbausteine aktiviert, welcher den tatsächlich auftretenden Zuständen des in dem Kältemittelkreis verwendeten Kältemittels zugeordnet ist. Demgegenüber können diejenigen Funktionsbausteine durch die Steuerungseinrichtung deaktiviert werden, welche im Betrieb des Kältemittelkreises nicht auftretenden Zuständen des jeweils verwendeten Kältemittels entsprechen oder zugeordnet sind. Dies macht die Verwendung unterschiedlich arbeitender Kältemittel in dem Kältemittelkreis besonders einfach und aufwandsarm.

Vorzugsweise wird bei einem Verbringen des in dem Kältemittelkreis verwendeten Kältemittels in den jeweiligen Zustand eine Umgebungstemperatur berücksichtigt. Auf diese Weise können die den unterschiedlichen Zuständen des Kältemittels zugeordneten Funktionsbausteine sehr gut die Bereitstellung einer Kälteleistung bewirken, welche von der Umgebungstemperatur abhängig ist.

Beispielsweise kann ein Kältemittel, welches in überkritische Zustände verbracht werden kann, entsprechend demjenigen Funktionsbaustein genutzt werden, welcher für das Betreiben des Kältemittelkreises mit dem unterkritische Zustände aufweisenden Kältemittel vorgesehen ist, wenn vergleichsweise niedrige Umgebungstemperaturen vorliegen.

Wenn demgegenüber höhere Umgebungstemperaturen vorliegen, so kann der Funktionsbaustein verwendet werden, welcher für Übergänge zwischen dem unterkritischen Zustand und dem überkritischen Zustand des Kältemittels vorgesehen ist.

Bei nochmals höheren Umgebungstemperaturen kann der Funktionsbaustein verwendet werden, welcher für das Betreiben des Kältemittelkreises mit dem überkritische Zustände aufweisenden Kältemittel vorgesehen ist. Auf diese Weise kann sehr gut auf die bei den jeweiligen Umgebungstemperaturen vorliegenden Kälteanforderungen an den Kältemittelkreis reagiert werden.

Vorzugsweise enthält die Funktionsbibliothek jeweilige Funktionsbausteine, welche eine Betriebsweise jeweiliger Verdampfer angeben. Hierbei wird durch die Steuerungseinrichtung lediglich der wenigstens eine dieser Funktionsbausteine aktiviert, welcher wenigstens einem tatsächlich in dem Kältemittelkreis vorhandenen Verdampfer zugeordnet ist. Auf diese Weise lässt sich der Betrieb des Kältemittelkreises sehr einfach anpassen, wenn der Kältemittelkreis zusätzlich zu einem Verdampfer wenigstens einen weiteren Verdampfer aufweist. Die Funktionsbausteine, welche den tatsächlich in dem Kältemittelkreis vorhandenen Verdampfern zugeordnet sind, bilden insbesondere Verschaltungen oder Systemkonfigurationen ab, welche in Abhängigkeit von der in dem Kältemittelkreis vorhandenen Anzahl an Verdampfern darstellbar sind.

Beispielsweise können die in der Funktionsbibliothek enthaltenen Funktionsbausteine als eine erste Verschaltung oder Systemkonfiguration den Betrieb eines ersten Verdampfers angeben, welcher in einem Frontbereich eines Fahrgastraums des Kraftfahrzeugs, insbesondere in einem Klimagerät des Kraftfahrzeugs, angeordnet ist und daher als Frontverdampfer bezeichnet werden kann, welcher im Betrieb üblicherweise mit Luft beaufschlagt wird.

Des Weiteren kann die Funktionsbibliothek einen Funktionsbaustein enthalten, welcher die Betriebsweise eines als Chiller ausgebildeten zweiten Verdampfers oder weiteren Verdampfers angibt und damit eine zweite oder weitere Verschaltung oder Systemkonfiguration beschreibt. Ein solcher Chiller nimmt im Betrieb Wärme aus einem Kühlmittelstrom auf. Über diesen Kühlmittelstrom kann beispielsweise Wärme von einem elektrischen Energiespeicher des Kraftfahrzeugs und/oder von einem Elektromotor des Kraftfahrzeugs abgeführt werden.

Bei der Komponente des Kältemittelkreises in Form des Chillers handelt es sich um einen Wärmeübertrager mit der Funktion eines Verdampfers, welcher im Betrieb von einem den Wärmeübertrager durchströmenden weiteren Fluid in Form des Kühlmittels Wärme aufnimmt und dieses dabei abkühlt. Auf diese Weise kann insbesondere eine aktive Kühlung einer Hochvoltkomponente wie des elektrischen Energiespeichers und/oder einer Antriebsmaschine wie des wenigstens einen Elektromotors des Kraftfahrzeugs bewirkt werden. Ist der Chiller vorhanden und wird der dem Chiller zugeordnete Funktionsbaustein aktiviert, so kann das System beziehungsweise der Kältemittelkreis in der entsprechenden Verschaltung oder Systemkonfiguration eine Batteriekühlung wie programmiert beziehungsweise auf korrekte Weise durchführen.

Es kann vorgesehen sein, dass in einem Single-Chiller-Betrieb des Kältemittelkreises auf der Niederdruckseite nur ein Verdampfer in Form des Chillers als Wärmesenke arbeitet und in einem Dual-Verdampfer-Modus sowohl der Chiller als auch der Frontverdampfer oder Innenraumverdampfer als Wärmesenken arbeiten beziehungsweise in dem System oder Kältemittelkreis aktiv sind. Auf diese Weise kann einer variablen Anzahl an Verdampfern über eine entsprechend vorbestückte Funktionsbibliothek Rechnung getragen werden.

Des Weiteren kann die Funktionsbibliothek einen Funktionsbaustein enthalten, welcher die Betriebsweise eines Verdampfers angibt, der zum Klimatisieren eines Heckbereichs des Fahrgastraums vorgesehen ist und daher als Heckverdampfer bezeichnet werden kann. Bei einem Vorsehen dieses weiteren Verdampfers ist eine weitere Verschaltung oder Systemkonfiguration darstellbar.

Weist der Kältemittelkreis lediglich einen Verdampfer etwa in Form des Frontverdampfers oder Innenraumverdampfers auf, so kann mit diesem eine Verschaltung oder Systemkonfiguration etwa in Form einer Innenraumklimatisierung allein mittels des Frontverdampfers abgebildet werden. Ist in dem Kältemittelkreis als weiterer Verdampfer beispielsweise der Heckverdampfer vorhanden, so können drei Verschaltungen oder Systemkonfigurationen abgebildet oder realisiert werden, nämlich ein Betrieb nur mit dem Frontverdampfer, ein Betrieb nur mit Heckverdampfer und ein Betrieb mit dem Frontverdampfer und dem Heckverdampfer gemeinsam.

Wird zu den beiden genannten Verdampfern noch ein Chiller hinzugenommen, so können in einer weiteren Systemkonfiguration alle drei Verdampfer oder Wärmeübertrager gemeinsam betrieben werden und in nochmals weiteren Verschaltungen oder Systemkonfigurationen jeder der drei Verdampfer oder Wärmeübertrager alleine, und in nochmals zusätzlichen Verschaltungen oder Systemkonfigurationen können zwei der drei Wärmeübertrager jeweils paarweise gemeinsam betrieben werden.

Für jede der genannten Verschaltungen oder Systemkonfigurationen kann ein eigenständiger Funktionsbaustein in der Funktionsbibliothek hinterlegt sein, welcher in Abhängigkeit von den tatsächlich vorhandenen Verdampfern aktiviert oder deaktiviert werden kann.

Wenn also der zu betreibende Kältemittelkreis lediglich den Frontverdampfer aufweist, so wird lediglich der dem Frontverdampfer zugeordnete Funktionsbaustein durch die Steuerungseinrichtung aktiviert. Demgegenüber werden die dem Chiller und dem Heckverdampfer zugeordneten Funktionsbausteine deaktiviert. Dennoch lässt sich der Betrieb des Kältemittelkreises sehr einfach anpassen, wenn der in dem Kraftfahrzeug verbaute Kältemittelkreis wenigstens einen der weiteren Verdampfer, beispielsweise den Chiller und/oder den Heckverdampfer, aufweist. Dies ist im Hinblick auf die aufwandsarme und flexible Anpassung an Änderungen des Kältemittelkreises vorteilhaft.

Vorzugsweise enthält die Funktionsbibliothek einen ersten Funktionsbaustein, welcher einem Wärmeübertrager zugeordnet ist, der in einem Wärmepumpenbetrieb des Kältemittelkreises einen Luftstrom als Wärmequelle nutzt, und einen zweiten Funktionsbaustein, welcher einem weiteren Wärmeübertrager zugeordnet ist, der in einem Wärmepumpenbetrieb des Kältemittelkreises einen Kühlmittelstrom als Wärmequelle nutzt. Hierbei wird durch die Steuerungseinrichtung lediglich der wenigstens eine dieser Funktionsbausteine aktiviert, welcher wenigstens einem tatsächlich in dem Kältemittelkreis vorhandenen und in dem Wärmepumpenbetrieb die Wärmequelle nutzenden Wärmeübertrager zugeordnet ist. Auf diese Weise lässt sich mittels des Kältemittelkreises sehr aufwandsarm ein Wärmepumpenbetrieb realisieren, sofern die Führung des Kältemittels durch den jeweiligen Wärmeübertrager hindurch bei einer Nutzung der Wärmequelle den entsprechenden Wärmepumpenbetrieb des Kältemittelkreises zulässt. Dies ist einer hohen Flexibilität im Betrieb des Kältemittelkreises zuträglich.

Aufgrund der bespielhaft genannten unterschiedlichen Verschaltungen oder Systemkonfigurationen, die durch eine unterschiedliche Anzahl an Wärmeübertragern des Kältemittelkreises ermöglich werden, kann ein jeweiliger Funktionsbaustein einem übergeordneten Element etwa in Form einer Funktionsbausteingruppe zugeordnet werden. In einer solchen Funktionsbausteingruppe der Funktionsbibliothek können aufgrund der unterschiedlichen Verschaltungsoptionen den jeweiligen Funktionsbausteinen Unterfunktionen zugeordnet sein. Beispielsweise können in einer den Betrieb von Verdampfern betreffenden Funktionsbausteingruppe die einzelnen Funktionsbausteine unterschiedliche Verschaltungen beschreiben, bei welchen beispielsweise jeweils einer der Verdampfer alleine oder mehrere Verdampfer gemeinsam betrieben werden. Analoges gilt für weitere Wärmeübertrager des Kältemittelkreises. Das Vorsehen derartiger Funktionsbausteingruppen vereinfacht die Handhabung der Funktionsbibliothek. Auf diese Weise kann eine maximale Anzahl an Verschaltungsmöglichkeiten und Kältemittelströmungsoptionen abgebildet und beschrieben werden.

Das erfindungsgemäße Kraftfahrzeug weist einen Kältemittelkreis und eine Steuerungseinrichtung auf, wobei die Steuerungseinrichtung dazu ausgebildet ist, aus einer eine Vielzahl von Funktionsbausteinen enthaltenden Funktionsbibliothek Funktionsbausteine auszuwählen, welche jeweiligen Komponenten des Kältemittelkreises zugeordnet sind. Die Steuerungseinrichtung ist weiter dazu ausgebildet, für das Betreiben des Kältemittelkreises lediglich diejenigen in der Funktionsbibliothek enthaltenen Funktionsbausteine zu aktivieren, welche in dem zu betreibenden Kältemittelkreis tatsächlich vorhandenen Komponenten und/oder tatsächlich vorgesehenen Verschaltungsmöglichkeiten des Kältemittelkreises zugeordnet sind, und diejenigen in der Funktionsbibliothek enthaltenen Funktionsbausteine zu deaktivieren, welche optional verwendbaren, aber in dem zu betreibenden Kältemittelkreis nicht vorhandenen Komponenten und/oder im Betrieb des Kältemittelkreises nicht vorgesehenen Verschaltungen des Kältemittelkreises zugeordnet sind.

Demzufolge ist die Steuerungseinrichtung zur Durchführung des erfindungsgemäßen Verfahrens ausgebildet, und in dem Kraftfahrzeug ist eine aufwandsarme und flexible Anpassung an Änderungen des Kältemittelkreises ermöglicht.

Zu der Erfindung gehört daher auch die Steuerungseinrichtung für das Kraftfahrzeug. Die Steuerungseinrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. In vorteilhafter Weise kann vorgesehen sein, dass der Datenspeicher von extern grundbedatet beziehungsweise mit Grunddaten bestückt und/oder modifiziert und damit überschrieben beziehungsweise neu beschrieben werden kann.

Auf diese Weise können insbesondere Updates von Funktionsbausteinen übertragen werden und/oder bei gegebenenfalls vorgesehenen Modifikationen oder Umbauten an dem System oder Kältemittelkreis neue beziehungsweise bisher deaktivierte Funktionsbausteine aktiviert oder auf einen aktiven Status gesetzt werden. Somit kann die beispielsweise als Steuergerät ausgebildete Steuerungseinrichtung flexibel auf neue Randbedingungen reagieren beziehungsweise an diese angepasst werden.

Die für das erfindungsgemäße Verfahren beschriebenen Vorteile und bevorzugten Ausführungsformen gelten auch für das erfindungsgemäße Kraftfahrzeug und umgekehrt.

Zu der Erfindung gehören demnach auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus ausgestaltet.

Die Erfindung umfasst**,** im Rahmen des Schutzumfangs der Ansprüche, auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: schematisch einen Kältemittelkreis eines Kraftfahrzeugs, welcher unabhängig von dem in dem Kältemittelkreis vorhandenen Kältemittel eine Nutzung gleicher Funktionsbausteine ermöglicht;
- Fig. 2: schematisiert das Kraftfahrzeug mit dem stark vereinfacht wiedergegebenen Kältemittelkreis gemäß Fig. 1;
- Fig. 3: Prozesskurven, welche mögliche Betriebsweisen des Kältemittelkreises bei einem unterkritischen Prozess, einem transkritischen Prozess und einem überkritischen Prozess veranschaulichen; und
- Fig. 4: eine Kurve oder Kennlinie, welche bei einer Hochdruckregelung des Kältemittelkreises herangezogen werden kann.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

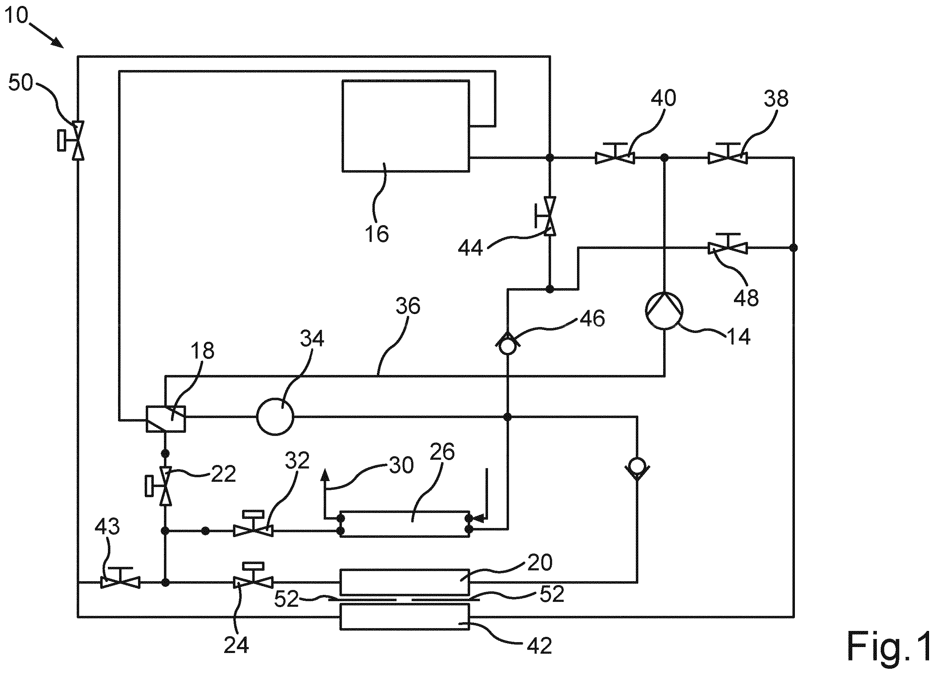

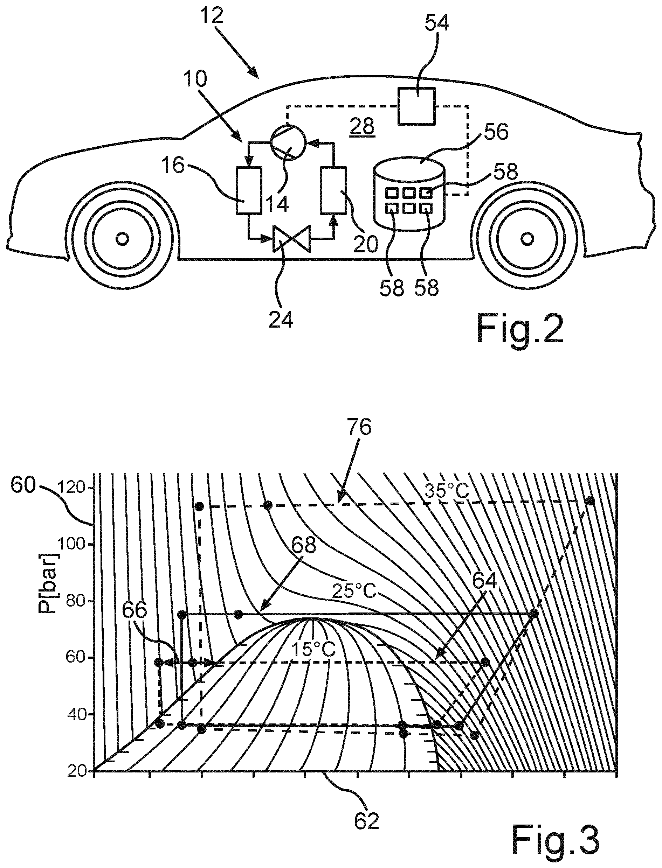

In Fig. 1 ist schematisch und beispielhaft ein Kältemittelkreis 10 gezeigt, wie er in einem in Fig. 2 gezeigten Kraftfahrzeug 12 zum Einsatz kommen kann. Der Kältemittelkreis 10 umfasst einen Verdichter 14, welcher beispielsweise als elektrisch angetriebener Kältemittelverdichter ausgebildet sein kann. In einem Klimaanlagenbetrieb des Kältemittelkreises 10 führt der Verdichter 14 das verdichtete Kältemittel einem Kondensator oder Gaskühler 16 zu, in welchem eine Abkühlung, bei Ausbildung als Kondensator insbesondere eine Kondensation und Unterkühlung des verdichteten Kältemittels stattfinden kann. In dem Klimaanlagenbetrieb des Kältemittelkreises 10 wird das Kältemittel vorliegend zunächst über einen inneren Wärmeübertrager 18 geführt und dann einem Verdampfer 20 zugeführt, welcher insbesondere in einem (nicht gezeigten) Klimagerät des Kraftfahrzeugs 12 angeordnet sein kann.

In diesem Klimaanlagenbetrieb des Kältemittelkreises 10 ist eine Absperreinrichtung 22 geöffnet. Die Absperreinrichtung 22, welche insbesondere als absperrbares und bidirektional durchströmbares Expansionsorgan ausgeführt sein kann, ist gemäß Fig. 1 zwischen dem inneren Wärmeübertrager 18 und einem Expansionsorgan 24 angeordnet ist, das dem Verdampfer 20 vorgeschaltet ist und dem Entspannen des Kältemittels dient. Mittels des Verdampfers 20 kann ein Luftstrom gekühlt und/oder entfeuchtet werden, welcher in einen Fahrgastraum 28 des Kraftfahrzeugs 12 (vergleiche Fig. 2) eingebracht werden kann.

Gemäß Fig. 1 kann dem Verdampfer 20 ein weiterer Verdampfer parallelgeschaltet sein, welcher in diesem Anwendungsfall als sogenannter Chiller 26 ausgebildet ist. Während mittels des Verdampfers 20 in dem Klimaanlagenbetrieb des Kältemittelkreises 10 der Luftstrom oder die Luft gekühlt und/oder entfeuchtet werden kann, welche in den Fahrgastraum 28 des Kraftfahrzeugs 12 eingebracht werden soll, dient der als der Chiller 26 ausgebildete Verdampfer dem Aufnehmen von Wärme aus einem Kühlmittelstrom 30, welcher in Fig. 1 schematisch angedeutet ist. Auch dem Chiller 26 ist ein Expansionsorgan 32 vorgeschaltet, mittels welchem das von einem hochdruckseitigen Abschnitt des inneren Wärmeübertragers 18 herkommende Kältemittel entspannt werden kann.

Das von dem Verdampfer 20 und/oder dem Chiller 26 herkommende Kältemittel wird einem Kältemittelspeicher 34 zugeführt, welcher vorliegend auf einer Niederdruckseite des Kältemittelkreises 10 angeordnet ist. Dementsprechend ist eine von dem Kältemittelspeicher 34 zu dem Verdichter 14 führende Kältemittelleitung 36 des Kältemittelkreises 10 an eine Niederdruckseite des Verdichters 14 angeschlossen. Gemäß Fig. 1 ist ein niederdruckseitiger Abschnitt des inneren Wärmeübertragers 18 in diese Kältemittelleitung 36 eingebunden.

Weitere mögliche Verdampfer wie etwa ein Heckverdampfer zum Konditionieren eines Zuluftstroms für einen Heckbereich oder Fondraum des Kraftfahrzeugs 12 sind in Fig. 1 aus Gründen der Übersichtlichkeit nicht dargestellt und eine Beschreibung derselben ist für ein Verständnis der nachfolgend zu erläuternden Gedanken oder Sachverhalte nicht erforderlich.

Gemäß Fig. 1 kann der Kältemittelkreis 10 auch in einem Wärmepumpenbetrieb betrieben werden, in welchem beispielsweise ein den Gaskühler 16 überströmender beziehungsweise durchströmender Luftstrom oder der Kühlmittelstrom 30 als Wärmequelle genutzt werden kann.

In dem Wärmepumpenbetrieb kann durch Öffnen eines ersten Absperrventils 38 und Schließen eines weiteren Absperrventils 40 dafür gesorgt werden, dass das von dem Verdichter 14 geförderte Kältemittel einem Heizregister 42 zugeführt wird, welches beispielsweise in dem Klimagerät des Kraftfahrzeugs 12, insbesondere stromabwärts des Verdampfers 20, angeordnet sein kann.

In dem Wärmepumpenbetrieb des Kältemittelkreises 10 wird ein weiteres Absperrventil 43 geöffnet und beispielsweise die vorzugsweise als Expansionsorgan ausgeführte Absperreinrichtung 22 zum Entspannen des Kältemittels genutzt, welches dann zunächst dem Gaskühler 16 zugeführt wird. In dem Gaskühler 16 findet eine Aufnahme von Wärme aus dem Luftstrom statt, welcher den Gaskühler 16 überströmt beziehungsweise durchströmt. Von dem Gaskühler 16 gelangt das Kältemittel bei geöffnetem Absperrventil 44, vorliegend über ein Rückschlagventil 46 und den Kältemittelspeicher 34, anschließend wieder zu der Niederdruckseite des Verdichters 14.

In dem Wärmepumpenbetrieb des Kältemittelkreises 10 kann des Weiteren das von dem Heizregister 42 kommende Kältemittel bei geöffnetem Absperrventil 43 und geschlossener Absperreinrichtung 22 mittels des dem Chiller 26 vorgeschalteten Expansionsorgans 32 entspannt und anschließend dem Chiller 26 zugeführt werden. In diesem Fall dient der Kühlmittelstrom 30 als Wärmequelle. Das von dem Chiller 26 herkommende Kältemittel wird auch in diesem Wärmepumpenbetrieb über den Kältemittelspeicher 34 und den inneren Wärmeübertrager 18 der Niederdruckseite des Verdichters 14 zugeführt.

Des Weiteren kann in einem Nachheizbetrieb des Kältemittelkreises 10 das von dem Verdichter 14 verdichtete und zunächst dem Heizregister 42 zugeführte Kältemittel durch zumindest teilweises Öffnen einer weiteren Absperreinrichtung 50 dem Gaskühler 16 und anschließend von dort aus bei geschlossenem Absperrventil 44 und geöffneter Absperreinrichtung 22 über das dem Verdampfer 20 vorgeschaltete Expansionsorgan 24 dem Verdampfer 20 zugeführt werden. Durch das teilweise Öffnen der weiteren, in dem Nachheizbetrieb als Expansionseinrichtung dienenden Absperreinrichtung 50 kann bewirkt werden, dass das den Gaskühler 16 durchströmende Kältemittel einen mittleren Druck aufweist, also einen Druck, welcher geringer ist als der ausgangsseitig des Verdichters 14 vorliegende Hochdruck, jedoch höher als der eingangsseitig des Verdichters 14 vorliegende Niederdruck. Wird die Absperreinrichtung 50 weiter geöffnet, so stellt sich ab einem gewissen durchströmbaren Querschnitt eine lediglich den Niederdruck und den Hochdruck umfassende Zweidrucklage ein.

Weitere Betriebsweisen des Kältemittelkreises 10 und jeweilige Schaltstellungen von Ventilen des Kältemittelkreises 10, etwa der Absperreinrichtung 50 sowie eines weiteren Absperrventils 48, sowie von beispielsweise in dem Klimagerät angeordneten Luftklappen 52 können etwa der DE 10 2018 213 232 A1 entnommen werden.

Eine der Steuerung und/oder Regelung des Kältemittelkreises 10 dienende Steuerungseinrichtung 54 des Kraftfahrzeugs 12, welche in Fig. 1 aus Gründen der Übersichtlichkeit nicht gesondert dargestellt ist, ist in Fig. 2 gezeigt. Gemäß Fig. 2 kann die Steuerungseinrichtung 54 auf eine Funktionsbibliothek 56 zugreifen, welche insbesondere in dem Kraftfahrzeug 12 bereitgestellt sein kann. In der vorliegend dem Kraftfahrzeug 12 zugehörigen Funktionsbibliothek 56 ist eine Vielzahl von Funktionsbausteinen 58 enthalten, von welchen in Fig. 2 lediglich einige mit einem Bezugszeichen versehen sind.

Bei einer alternative Herangehensweise kann vorgesehen sein, abseits des Kraftfahrzeugs 12 eine vollständige Software-Erstellung in einer maximalen Konfiguration vorzunehmen und lediglich ein finales Datenpaket auf die fahrzeuginterne Steuerungseinrichtung 54 zu überspielen. Im Rahmen der Software-Erstellung kann hierbei auf eine beispielsweise fahrzeugextern existierende, etwa auf einem Datenserver hinterlegte Funktionsbibliothek 56 zugegriffen werden. Im Rahmen eines bestimmten Fahrzeugprojekts kann für die Abbildung einer jeweiligen Systemkonfiguration aus einer maximal möglichen Konfiguration auf die für das konkrete Fahrzeugprojekt vorgesehenen Funktionsbausteine 58 zurückgegriffen werden. Diese Funktionsbausteine 58 können in eine Funktionssoftware-Erstellung eingebunden werden. Während des Produktionsprozesses oder Montageprozesses des Kraftfahrzeugs 12 mit dem entsprechenden Kältemittelkreis 10 können über eine Bedatung des Steuergeräts beziehungsweise der Steuerungseinrichtung 54 einerseits das Softwarepaket übertragen und andererseits entsprechende Verschaltungen des Kältemittelkreises 10 hinterlegt werden.

Hierbei können die erforderlichen Bits zur Aktivierung oder Deaktivierung bestimmter Funktionalitäten und/oder Systemkonfigurationen gesetzt oder offen gelassen werden. Dementsprechend kann durch einfache Änderung einer Schalterposition, bei welcher ein jeweiliges Bit entweder gesetzt ist oder nicht gesetzt ist, die maximale Funktionalität auf die bei dem Kältemittelkreis 10 tatsächlich gegebene oder tatsächlich vorhandene Funktionalität reduziert werden. Eine solche Reduzierung der Funktionalität braucht natürlich nur vorgenommen zu werden, wenn der tatsächliche Aufbau des Kältemittelkreises 10 oder die vorgesehenen Betriebsweisen des Kältemittelkreises 10 dies erfordern.

Aus Gründen der Einfachheit sind von dem in Fig. 1 gezeigten Kältemittelkreis 10 in Fig. 2 lediglich einige Komponenten dargestellt, nämlich der Verdichter 14, der Gaskühler 16, das Expansionsorgan 24 sowie der Verdampfer 20. Tatsächlich weist der in Fig. 2 gezeigte und in dem Kraftfahrzeug 12 angeordnete Kältemittelkreis 10 jedoch vorzugsweise die mit Bezug auf Fig. 1 erläuterten Komponenten auf.

Die in der Funktionsbibliothek 56 enthaltenen Funktionsbausteine 58 sind jeweiligen Komponenten des Kältemittelkreises 10 zugeordnet. Zusätzlich oder alternativ sind die in der Funktionsbibliothek 56 enthaltenen Funktionsbausteine 58 Verschaltungsmöglichkeiten oder Systemkonfigurationen des Kältemittelkreises 10 zugeordnet, welche in dem Kältemittelkreis 10 einstellbaren oder abbildbar sind. Beispielsweise kann einer der Funktionsbausteine 58 dem Verdichter 14 zugeordnet sein, während ein weiterer der Funktionsbausteine 58 dem Gaskühler 16 zugeordnet ist. Analoges gilt für weitere Komponenten des Kältemittelkreises 10, etwa für den Verdampfer 20, den Chiller 26, die diesen Verdampfern vorgeschalteten Expansionsorgane 24, 32, das Heizregister 42, den inneren Wärmeübertrager 18, den Kältemittelspeicher 34 und dergleichen. Auch den jeweiligen Absperreinrichtungen 22, 50 und Absperrventilen 38, 40, 43, 44, 48 ist vorzugsweise jeweils einer der Funktionsbausteine 58 zugeordnet, welche in der Funktionsbibliothek 56 bereitgestellt werden.

Des Weiteren kann vorgesehen sein, einen jeweiligen der Funktionsbausteine 58 einer jeweiligen Systemkonfiguration oder Verschaltungsvariante des Kältemittelkreises 10 zuzuordnen. Beispielsweise kann ein Funktionsbaustein 58 einer Konditionierung der Zuluft allein mittels des Verdampfers 20 zugeordnet sein, welche in den Innenraum oder Fahrgastraum 28 des Kraftfahrzeugs 12 eingebracht wird. Dieser Funktionsbaustein 58 ist somit den zur Darstellung einer solchen Funktion des Kältemittelkreises 10 vorgesehenen Komponenten und deren Betriebsweise zugeteilt.

Ein weiterer Funktionsbaustein 58 kann einer Verschaltung des Kältemittelkreises 10 zugeordnet sein, bei welcher allein mittels des Chillers 26 eine Kühlung etwa einer Batterie beziehungsweise eines derartigen (nicht gezeigten) elektrischen Energiespeichers des Kraftfahrzeugs 12 durch Abführen von Wärme aus dem Kühlmittelstrom 30 stattfindet.

Ein dritter Funktionsbaustein 58 kann einer Verschaltung des Kältemittelkreises 10 zugeordnet sein, bei welchem ein Dualbetrieb stattfindet, in welchem sowohl der Verdampfer 20 als auch der Chiller 26 mit Kältemittel beaufschlagt werden.

Vorliegend aktiviert die Steuerungseinrichtung 54 für das Betreiben des Kältemittelkreises 10 lediglich diejenigen in der Funktionsbibliothek 56 enthaltenen Funktionsbausteine 58, welche in dem zu betreibenden Kältemittelkreis 10 tatsächlich vorhandenen Komponenten zugeordnet sind. Demgegenüber werden von der Steuerungseinrichtung 54 in der Funktionsbibliothek 56 enthaltene Funktionsbausteine 58 deaktiviert, welche in dem Kältemittelkreis 10 nicht vorhandenen Komponenten zugeordnet sind, wobei diese Komponenten bei einer anderen als der in Fig. 1 beispielhaft gezeigten Ausgestaltung des Kältemittelkreises 10 vorgesehen sein können.

Die Aktivierung und die Deaktivierung der Funktionsbausteine 58 kann insbesondere während der Fertigung des Kraftfahrzeugs 12 vorgenommen werden. Denn dann ist bekannt, welche Komponenten in dem Kältemittelkreis 10 verbaut sind und welche Systemkonfigurationen oder Verschaltungen realisiert werden sollen. Dementsprechend kann eine Aktivierung oder Deaktivierung eines jeweiligen Bits erfolgen, etwa anhand eines Aufbaucodes oder Funktionscodes, welcher der Steuerungseinrichtung 54 zugewiesen wird. Entsprechend kann von der Steuerungseinrichtung 54 bei einer Aktivierung des jeweiligen Funktionsbausteins 58 das Bit auf 1 und bei einer der Deaktivierung des jeweiligen Funktionsbausteins das Bit auf 0 gesetzt werden.

Für den Betrieb des jeweiligen Kältemittelkreises 10 nicht erforderliche Funktionsbausteine 58, welche in der Funktionsbibliothek 56 des Kraftfahrzeugs 12 zwar enthalten sind, aber für den Betrieb des Kältemittelkreises 10 nicht erforderlich sind, werden von der Steuerungseinrichtung 54 demnach ausgeblendet oder deaktiviert. Wenn also beispielsweise der Chiller 26 nicht vorhanden ist, so brauchen weder der dem Chiller 26 zugeordnete Funktionsbaustein 58 noch der dem Expansionsorgan 32 zugeordnete Funktionsbaustein 58 von der Steuerungseinrichtung 54 aktiviert zu werden. Folglich können sämtliche Systemkonfigurationen oder Verschaltungen, welche einen Betrieb des in diesem Fall gar nicht vorhandenen Chillers 26 betreffen, deaktiviert und insbesondere das dem entsprechenden Funktionsbaustein 58 zugeordnete Bit auf "0" gesetzt werden.

Sind entsprechend der Ausbaustufe des in dem Kraftfahrzeug 12 tatsächlich vorhandenen Kältemittelkreises 10 jedoch der Chiller 26 und das dem Chiller 26 vorgeschaltete Expansionsorgan 32 vorgesehen, so werden die Funktionsbausteine 58 durch die Steuerungseinrichtung 54 aktiviert, welche diesen Komponenten des Kältemittelkreises 10 zugeordnet sind. In diesem Fall können sämtliche Systemkonfigurationen oder Verschaltungen, welche einen Betrieb des in dem Kältemittelkreis 10 vorhandenen Chillers 26 betreffen, aktiviert und insbesondere das dem jeweiligen Funktionsbaustein 58 zugeordnete Bit auf "1" gesetzt werden.

Bei dieser Vorgehensweise ist insbesondere vorteilhaft, dass einerseits ein synthetisches Kältemittel wie etwa R1234yf in dem Kältemittelkreis 10 verwendet werden kann oder ein natürliches Kältemittel wie etwa R744, also Kohlendioxid. Unabhängig davon, welches dieser Kältemittel in dem Kältemittelkreis 10 zum Einsatz kommt, kann der in Fig. 1 gezeigte Aufbau des Kältemittelkreises 10 verwendet werden.

Die Kälteanlage beziehungsweise der Kältemittelkreis 10 ist daher so ausgestaltet, dass unabhängig von dem eingesetzten Kältemittel auf dieselbe Funktionsbeschreibung zurückgegriffen wird, welche in der Funktionsbibliothek 56 in Form der Funktionsbausteine 58 oder Softwarebausteine abgelegt ist.

Bei der Applikation werden vorzugsweise die dem jeweiligen Kältemittel zugehörigen Stoffdaten herangezogen, um Werte vorzugeben, welche dann von den Funktionsbausteinen 58 oder Softwarebausteinen im Betrieb des Kältemittelkreises 10 verarbeitet werden. Die Funktionsbausteine 58 können somit in der Funktionsbibliothek 56 zwar unabhängig vom tatsächlich verwendeten Kältemittel vorgehalten werden, aber die von dem jeweiligen Funktionsbaustein 58 verarbeiteten Werte sind vorzugsweise abhängig von dem verwendeten Kältemittel.

Um einen Aufbau des Kältemittelkreises 10 bereitzustellen, bei welchem sowohl ein transkritisches Kältemittel wie etwa R744 als auch ein unterkritisches Kältemittel wie etwa R1234yf zum Einsatz kommen kann, kann beispielsweise die in Fig. 1 gezeigte Topologie des Kältemittelkreises 10 genutzt werden.

Bei Verwendung des Kältemittels R744 ist der Kältemittelspeicher 34 vorzugsweise auf der Niederdruckseite des Kältemittelkreises 10 angeordnet, und es ist aus thermodynamischen Gründen beziehungsweise im Hinblick auf die Leistung und die Effizienz sinnvoll, auch den inneren Wärmeübertrager 18 vorzusehen.

Wenn demgegenüber beispielsweise R1234yf als unterkritisch arbeitendes Kältemittel in dem Kältemittelkreis 10 verwendet werden soll, so ist der Kältemittelspeicher 34 vorzugsweise auf der Hochdruckseite des Kältemittelkreises 10 angeordnet und der innere Wärmeübertrager 18 ist optional.

Gemäß dem in Fig. 1 gezeigten Aufbau des Kältemittelkreises 10 ist somit eine Vereinheitlichung von Grundkonzepten der Kälteanlage oder des Kältemittelkreises 10 darin zu sehen, dass der Kältemittelspeicher 34 auf der Niederdruckseite angeordnet ist. Zudem ist für beide Systeme oder Kältemittelkreise 10 der innere Wärmeübertrager 18 vorgesehen.

Wenn in dem Kältemittelkreis 10 beispielsweise R744 als transkritisches Kältemittel zum Einsatz kommen soll, so ist es vorteilhaft, jeweilige Funktionsbausteine 58 für das Betreiben des Kältemittelkreises 10 vorzusehen, welche überkritischen oder superkritischen Zuständen des Kältemittels entsprechen, und welche unterkritischen oder subkritischen Zuständen des Kältemittels entsprechen. Des Weiteren ist ein Funktionsbaustein 58 für das Betreiben des Kältemittelkreises 10 mit einem Übergänge zwischen dem unterkritischen Zustand und dem überkritischen Zustand aufweisenden Kältemittel vorzusehen.

Demgegenüber ist bei der Verwendung von beispielsweise R1234yf als unterkritisch arbeitendem Kältemittel lediglich der Funktionsbaustein 58 für das Betreiben des Kältemittelkreises 10 mit dem die unterkritischen Zustände aufweisenden Kältemittel vorzusehen.

Vorliegend sind in der Funktionsbibliothek 56 somit die Funktionsbausteine 58 für einen Betrieb des Kältemittelkreises 10 mit beispielsweise dem Kältemittel R744 und für einen Betrieb des Kältemittelkreises 10 mit beispielsweise dem Kältemittel R1234yf enthalten. Wenn in dem Kältemittelkreis 10 das Kältemittel R1234yf tatsächlich zum Einsatz kommt, so werden die Funktionsbausteine 58 für das Betreiben des Kältemittelkreises 10 mit einem überkritische Zustände aufweisenden Kältemittel und für Übergänge zwischen dem unterkritischen Zustand und dem überkritischen Zustand aufweisenden Kältemittel ausgeblendet oder deaktiviert.

Des Weiteren kann eine Stoffdatenbibliothek von R744 auf R1234yf umgestellt werden. Der Kältemittelkreis 10 arbeitet dann auf dieser Datenbasis, aufgrund welcher Werte verarbeitet werden, welche die Eigenschaften des Kältemittels R1234yf berücksichtigen. Bei dem vorliegend ermöglichten, optimierten Betrieb des Kältemittelkreises 10 ist lediglich dieser Applikationsaufwand gegeben.

Des Weiteren kann in der Funktionsbibliothek 56 beispielsweise zusätzlich zu den Funktionsbausteinen 58, welche dem Verdampfer 20 und dem Chiller 26 zugeordnet sind, ein weiterer Funktionsbaustein 58 enthalten sein, welcher einem (nicht gezeigten) weiteren Verdampfer des Kältemittelkreises 10 zugeordnet ist, der als Heckverdampfer ausgebildet sein kann.

Bei der in Fig. 1 beispielhaft gezeigten Ausgestaltung des Kältemittelkreises 10 ist ein solcher Heckverdampfer, welcher dem Klimatisieren eines insbesondere in den Heckbereich des Fahrgastraums 28 einzubringenden Luftstroms dient, jedoch nicht vorhanden. Daher wird der dem Heckverdampfer zugeordnete und in der Funktionsbibliothek 56 enthaltene Funktionsbaustein 58 von der Steuerungseinrichtung 54 deaktiviert. Analoges gilt in diesem Fall auch für Bedatungen hinsichtlich möglicher Systemkonfigurationen oder Verschaltungen des Kältemittelkreises 10, welche im Zusammenhang mit einem Betrieb des nicht dargestellten Heckverdampfers stehen.

Und wenn der Kältemittelkreis 10 beispielsweise lediglich den Verdampfer 20 aufweist, welcher aufgrund seiner Anordnung in dem Klimagerät des Kraftfahrzeugs 12 auch als Frontverdampfer bezeichnet werden kann, so können die dem Chiller 26 und dem Heckverdampfer zugeordneten Funktionsbausteine 58 sowie die mit dem Chiller 26 und dem Heckverdampfer in Verbindung stehenden Verschaltungen oder Systemkonfigurationen der Funktionsbibliothek 56 deaktiviert werden.

Mit Bezug auf Fig. 1 wurden zusätzlich zu dem Klimaanlagenbetrieb des Kältemittelkreises 10 Wärmepumpenfunktionen des Kältemittelkreises 10 beschrieben, wobei als Wärmequellen beispielsweise der dem Gaskühler 16 zugeführte Luftstrom oder der dem Chiller 26 zugeführte Kühlmittelstrom 30 genutzt werden können. Wenn nun der Kältemittelkreis 10 so betrieben wird, dass lediglich der Kühlmittelstrom 30 als Wärmequelle genutzt werden soll, so können diejenigen Funktionsbausteine 58 von der Steuerungseinrichtung 54 ausgeblendet oder deaktiviert werden, welche dem Betrieb des Gaskühlers 16 als Wärmeübertrager für einen Wärmepumpenbetrieb sowie der bei einem solchen Betrieb zu schaltenden Ventile und/oder Absperrorgane oder dergleichen zugeordnet sind. Dementsprechend arbeitet der Kältemittelkreis 10 dann im Wärmepumpenbetrieb lediglich als Wasserwärmepumpe und nicht als Luftwärmepumpe.

Bei der Konzeption des Kältemittelkreises 10 spielt auch eine Rolle, welche Kältemittel in dem Kältemittelkreis 10 zum Einsatz kommen könnten. Wenn als Kältemittel beispielsweise R1234yf zum Einsatz kommt, so ist die Anordnung des Kältemittelspeichers 34 nicht wie in Fig. 1 gezeigt auf der Niederdruckseite des Kältemittelkreises 10, sondern auf der Hochdruckseite des Kältemittelkreises 10 vorteilhaft.

Wenn jedoch lediglich der Softwarebaustein oder Funktionsbaustein 58 für einen solchen, auf der Hochdruckseite des Kältemittelkreises 10 angeordneten Kältemittelspeicher 34 in der Funktionsbibliothek 56 vorhanden wäre, so würde ein Umstieg etwa auf das Kältemittel R744 das Vorsehen eines weiteren Funktionsbausteins 58 erforderlich machen, welcher dem in Fig. 1 gezeigten, auf der Niederdruckseite des Kältemittelkreises 10 angeordneten Kältemittelspeicher 34 zugeordnet ist. Dies ist vorliegend vermieden.

Zum einen ist nämlich unabhängig von der Art des verwendeten Kältemittels der Kältemittelspeicher 34 auf der Niederdruckseite des Kältemittelkreises 10 angeordnet. Zum anderen kann die Funktionsbibliothek 56 sowohl den Funktionsbaustein 58 oder Softwarebaustein für den auf der Niederdruckseite des Kältemittelkreises 10 angeordneten Kältemittelspeicher 34 als auch einen weiteren Funktionsbaustein 58 oder Softwarebaustein für einen auf der Hochdruckseite des Kältemittelkreises 10 angeordneten Kältemittelspeicher 34 enthalten. Aufgrund der tatsächlichen Anordnung des Kältemittelspeichers 34 auf der Niederdruckseite des Kältemittelkreises 10 braucht dieser weitere oder letztgenannte Funktionsbaustein 58 jedoch nicht aktiviert zu werden. Des Weiteren braucht dieser Funktionsbaustein 58 gar nicht separat entwickelt zu werden, wenn durchgängig über alle Topologien des Kältemittelkreises 10 hinweg ausschließlich der auf der Niederdruckseite des Kältemittelkreises 10 angeordnete Kältemittelspeicher 34 vorgesehen ist.

Das Vorsehen des Kältemittelspeichers 34 auf der Niederdruckseite des Kältemittelkreises 10 ist insbesondere bei einer Verwendung des Kältemittels R744 thermodynamisch vorteilhaft.

Sowohl bei der Verwendung von R1234yf als Kältemittel als auch von R744 als Kältemittel in dem Kältemittelkreis 10 kann insbesondere dann, wenn der Kältemittelkreis 10 keine Wärmepumpenfunktion aufweisen soll, auf die in der Funktionsbibliothek 56 vorhandenen Funktionsbausteine 58 zurückgegriffen werden. Und unabhängig davon, ob als Kältemittel etwa R1234yf oder R744 zum Einsatz kommt, ist der Kältemittelkreis 10 dazu geeignet, in einem Land oder einer Region mit vergleichsweise hohen Umgebungstemperaturen eingesetzt zu werden.

Durch das Vorsehen des Kältemittelspeichers 34 oder Kältemittelsammlers auf der Niederdruckseite des Kältemittelkreises 10 und des inneren Wärmeübertrages 18 kann problemlos eine Umstellung etwa von dem Kältemittel R1234yf auf das Kältemittel R744 vorgenommen werden, ohne dass in der Funktionsbibliothek 56 weitere Funktionsbausteine 58 ergänzt zu werden bräuchten. Daher ist der in Fig. 1 gezeigte Kältemittelkreis 10 sowohl im Hinblick auf die Leistung und die Effizienz als auch auf die Kosten vorteilhaft.

Außerdem können sowohl das Kältemittel R1234yf als auch das Kältemittel R744 in dem Kältemittelkreis 10 verwendet werden, ohne dass im Hinblick auf den von den Komponenten des Kältemittelkreises 10 in dem Kraftfahrzeug 12 beanspruchten Bauraum signifikante Änderungen vorzunehmen wären. Des Weiteren können sämtliche dem Kühlmittelstrom 30 zugeordneten Komponenten eines (nicht gezeigten) Kühlmittelkreises des Kraftfahrzeugs 12 unverändert beibehalten werden.

In einem in Fig. 3 gezeigten Graphen ist auf einer Ordinate 60 der Druck aufgetragen und auf einer Abszisse 62 die Enthalpie. Eine erste, in sich geschlossene Prozesskurve 64 veranschaulicht hierbei einen Betrieb des Kältemittelkreises 10 mit einem unterkritisch arbeitenden Kältemittel.

Beispielsweise bei Umgebungstemperaturen von weniger als etwa 25 Grad Celsius kann in dem Kältemittelkreis 10 ein der Prozesskurve 64 entsprechender, unterkritischer Prozess zum Einsatz kommen, wie er beispielsweise bei einer Regelung eines Kältemittelkreislaufs oder Kältemittelkreises vorgesehen ist, in welchem das Kältemittel R1234yf verwendet wird. Insbesondere kann in einem Unterkühlabschnitt 66 der Prozesskurve 64 eine Unterkühlungsregelung vorgenommen werden, bei welcher das ausgangsseitig des dann als Kondensator betriebenen Gaskühlers 16 vorliegende flüssige Kältemittel weiter unterkühlt wird.

Eine weitere in sich geschlossene Prozesskurve 68 in Fig. 3 veranschaulicht einen transkritischen Prozess im Bereich des kritischen Punktes, bei welchem sowohl unterkritische Zustände des Kältemittels als auch überkritische Zustände des Kältemittels auftreten. Hier kann als Regelgröße die Temperatur des Kältemittels an einer Austrittsseite des Gaskühlers 16 herangezogen werden. Auf der Basis dieser Temperatur kann ein Kompromissbetrieb des Kältemittelkreises 10 umgesetzt werden, bei welchem eine Regelung nach einem optimalen Hochdruck oder nach einer Unterkühlung jeweils am Austritt des Gaskühlers16 vorgesehen sein kann. Eine mit dieser Prozesskurve 68 einhergehende Regelungsstrategie kann beispielsweise zum Einsatz kommen, wenn Umgebungstemperaturen insbesondere jedoch Kältemitteltemperaturen am Austritt des Gaskühlers 16 von beispielsweise mehr als etwa 25 Grad Celsius aber weniger als etwa 35 Grad Celsius vorliegen.

Die Temperatur des Kältemittels am Austritt des Gaskühlers 16 liegt zwar in der Realität über der Umgebungstemperatur, kann aber dennoch für die Regelungsstrategie als im Wesentlichen der Umgebungstemperatur entsprechend herangezogen werden. Um die Regelungsstrategie zu vereinfachen beziehungsweise zu optimieren kann jedoch insbesondere auf ein Temperatursignal und/oder auf ein Drucksignal zurückgegriffen werden, welches am Austritt des Gaskühlers 16 erfasst werden kann.

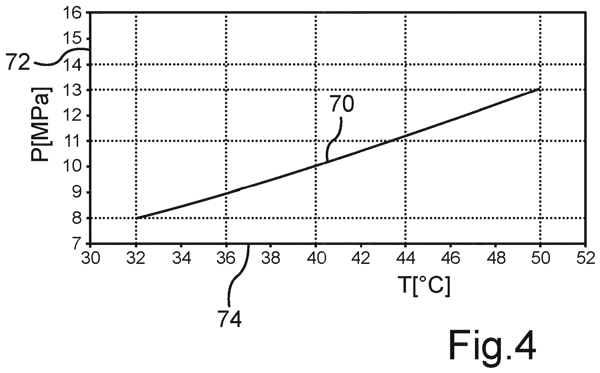

In einem in Fig. 4 gezeigten Graphen ist durch eine stetig ansteigende Kurve 70 ein Zusammenhang zwischen der Temperatur des Kältemittels an der Ausgangsseite oder Austrittsseite des Gaskühlers 16 und dem Druck des Kältemittels auf der Hochdruckseite des Verdichters 14 veranschaulicht. In dem in Fig. 4 gezeigten Graphen ist der Druck auf einer Ordinate 72 aufgetragen und die Temperatur auf einer Abszisse 74.

Insbesondere in dem transkritischen Prozess, welcher durch die Prozesskurve 68 in Fig. 3 veranschaulicht ist, kann eine Hochdruckregelung des Verdichters 14 vorgenommen werden, wobei der von dem Verdichter 14 bewirkte Hochdruck des Kältemittels abhängig von der Temperatur des Kältemittels am Ausgang des Gaskühlers 16 eingestellt werden kann. Für eine solche Hochdruckregelung kann von der Steuerungseinrichtung 54 die in Fig. 4 gezeigte Kurve 70 herangezogen werden.

In Fig. 3 ist eine dritte in sich geschlossene Prozesskurve 76 gezeigt, welche einen möglichen Betrieb des Kältemittelkreises 10 veranschaulicht, wenn ein überkritische Zustände aufweisendes Kältemittel zum Einsatz kommt. Diese Prozesskurve 76 kann von der Steuerungseinrichtung 54 beispielsweise dann verwendet werden, wenn Umgebungstemperaturen insbesondere jedoch Kältemitteltemperaturen am Austritt des Gaskühlers 16 von beispielsweise mehr als 35 Grad Celsius vorliegen.

Wenn in dem Kältemittelkreis 10 das Kältemittel R744 zum Einsatz kommt, so kann für den unterkritischen Betriebsbereich der Funktionsbaustein 58 für einen unterkritischen Betrieb des Kältemittelkreises 10 verwendet werden. Dieser Funktionsbaustein 58 kann in analoger Weise zum Einsatz kommen, wenn in dem Kältemittelkreis 10 das Kältemittel R1234yf zum Einsatz kommt. Jedoch wird bei Verwendung des Kältemittels R744 und Einsatz des dem unterkritischen Betrieb entsprechenden Algorithmus oder Funktionsbausteins 58 vorzugsweise ein Datensatz verwendet, welcher dem Kältemittel R744 zugeordnet ist.

Und für den transkritischen Bereich wird bei der Verwendung des Kältemittels R744 in dem Kältemittelkreis 10 von der Steuerungseinrichtung 54 vorzugsweise der entsprechende Softwarebaustein oder Funktionsbaustein 58 aktiviert, welcher dem Betrieb des Kältemittelkreises 10 in diesem transkritischen Bereich zugeordnet ist.

In dem unterkritischen Bereich ist sowohl bei der Verwendung des Kältemittels R1234yf als auch bei der Verwendung des Kältemittels R744 eine von der Steuerungseinrichtung 54 vorgenommene Unterkühlungsregelung vorteilhaft, während im überkritischen Bereich eine von der Steuerungseinrichtung 54 vorgenommene Hochdruckregelung etwa gemäß dem in Fig. 4 veranschaulichten Zusammenhang vorteilhaft ist. Übergänge zwischen diesen Regelungen können insbesondere abhängig vom Druck definiert werden. Alternativ kann ein Kompromissbetrieb zwischen einer Unterkühlungsregelung oder Druckregelung vorgesehen sein.

Insbesondere in Abhängigkeit von der Umgebungstemperatur kann die Steuerungseinrichtung 54 vorgeben, welcher der den jeweiligen Zuständen des Kältemittels zugeordneten Funktionsbausteine 58 bei der Ansteuerung der jeweiligen Komponenten des Kältemittelkreises 10 zum Einsatz kommen soll und dementsprechend aktiviert wird.

Im Betrieb des Kältemittelkreises 10 kann ein Zusammenwirken vorliegend nicht dargestellter Sensoren und gegebenenfalls weiterer Steuergeräte mit der Steuerungseinrichtung 54 vorgesehen sein, welche dem Fachmann bekannt sind und für eine Erläuterung der vorliegenden Idee eine eher untergeordnete Rolle spielen. Außerdem wurde aus Gründen der Übersichtlichkeit auf eine Darstellung und Erläuterung solcher Sensoren und/oder weiterer Steuergeräte verzichtet.

Insgesamt zeigen die Beispiele, wie eine Vereinheitlichung von Kälteanlagen beziehungsweise Kältemittelkreisen 10 insbesondere im Hinblick auf deren Funktionsbausteine 58 unabhängig von dem eingesetzten Kältemittel auf einfache Weise bereitgestellt werden kann.

## Patentansprüche

1. Verfahren zum Betreiben eines Kältemittelkreises (10) für ein Kraftfahrzeug (12), bei welchem eine Steuerungseinrichtung (54) aus einer eine Vielzahl von Funktionsbausteinen (58) enthaltenden Funktionsbibliothek (56) Funktionsbausteine (58) auswählt, welche jeweiligen Komponenten des Kältemittelkreises (10) zugeordnet sind,
**dadurch gekennzeichnet, dass**
die Steuerungseinrichtung (54) für das Betreiben des Kältemittelkreises (10) lediglich diejenigen in der Funktionsbibliothek (56) enthaltenen Funktionsbausteine (58) aktiviert, welche in dem zu betreibenden Kältemittelkreis (10) tatsächlich vorhandenen Komponenten und/oder tatsächlich vorgesehenen Verschaltungsmöglichkeiten des Kältemittelkreises (10) zugeordnet sind, und diejenigen in der Funktionsbibliothek (56) enthaltenen Funktionsbausteine (58) deaktiviert, welche optional verwendbaren, aber in dem zu betreibenden Kältemittelkreis (10) nicht vorhandenen Komponenten und/oder im Betrieb des Kältemittelkreises (10) nicht vorgesehenen Verschaltungen des Kältemittelkreises (10) zugeordnet sind.

2. Verfahren nach Anspruch 1,
**dadurch gekennzeichnet, dass**
im Betrieb des Kältemittelkreises (10) von den durch die Steuerungseinrichtung (54) aktivierten Funktionsbausteinen (58) Werte verarbeitet werden, welche Eigenschaften eines tatsächlich in dem Kältemittelkreis (10) vorhandenen Kältemittels berücksichtigen.

3. Verfahren nach einem der vorhergehenden Ansprüche,
**dadurch gekennzeichnet, dass**
durch die Steuerungseinrichtung (54) für das Betreiben des Kältemittelkreises (10) ein Funktionsbaustein (58) aktiviert wird, welcher einem auf einer Niederdruckseite des Kältemittelkreises (10) angeordneten Kältemittelspeicher (34) zugeordnet ist.

4. Verfahren nach einem der vorhergehenden Ansprüche,
**dadurch gekennzeichnet, dass**
durch die Steuerungseinrichtung (54) für das Betreiben des Kältemittelkreises (10) ein Funktionsbaustein (58) aktiviert wird, welcher einem inneren Wärmeübertrager (18) des Kältemittelkreises (10) zugeordnet ist.

5. Verfahren nach einem der vorhergehenden Ansprüche,
**dadurch gekennzeichnet, dass**
von der Funktionsbibliothek (56) jeweilige Funktionsbausteine (58) für das Betreiben des Kältemittelkreises (10) mit einem unterkritische Zustände aufweisenden Kältemittel, einem überkritische Zustände aufweisenden Kältemittel und einem Übergänge zwischen einem unterkritischen Zustand und einem überkritischen Zustand aufweisenden Kältemittel bereitgestellt werden.

6. Verfahren nach Anspruch 5,
**dadurch gekennzeichnet, dass**
durch die Steuerungseinrichtung (54) lediglich der wenigstens eine dieser Funktionsbausteine (58) aktiviert wird, welcher den tatsächlich auftretenden Zuständen des in dem Kältemittelkreis (10) verwendeten Kältemittels zugeordnet ist.

7. Verfahren nach Anspruch 5 oder 6,
**dadurch gekennzeichnet, dass**
bei einem Verbringen des in dem Kältemittelkreis (10) verwendeten Kältemittels in den jeweiligen Zustand eine Umgebungstemperatur berücksichtigt wird.

8. Verfahren nach einem der vorhergehenden Ansprüche,
**dadurch gekennzeichnet, dass**
die Funktionsbibliothek (56) jeweilige Funktionsbausteine (58) enthält, welche eine Betriebsweise jeweiliger Verdampfer (20, 26) angeben, wobei durch die Steuerungseinrichtung (54) lediglich der wenigstens eine dieser Funktionsbausteine (58) aktiviert wird, welcher wenigstens einem tatsächlich in dem Kältemittelkreis (10) vorhandenen Verdampfer (20, 26) zugeordnet ist.

9. Verfahren nach einem der vorhergehenden Ansprüche,
**dadurch gekennzeichnet, dass**
die Funktionsbibliothek (56) einen ersten Funktionsbaustein (58) enthält, welcher einem Wärmeübertrager zugeordnet ist, der in einem Wärmepumpenbetrieb des Kältemittelkreises (10) einen Luftstrom als Wärmequelle nutzt, und einen zweiten Funktionsbaustein (58) enthält, welcher einem weiteren Wärmeübertrager zugeordnet ist, der in einem Wärmepumpenbetrieb des Kältemittelkreises (10) einen Kühlmittelstrom (30) als Wärmequelle nutzt, wobei durch die Steuerungseinrichtung (54) lediglich der wenigstens eine dieser Funktionsbausteine (58) aktiviert wird, welcher wenigstens einem tatsächlich in dem Kältemittelkreis (10) vorhandenen und in dem Wärmepumpenbetrieb die Wärmequelle nutzenden Wärmeübertrager zugeordnet ist.

10. Kraftfahrzeug mit einem Kältemittelkreis (10) und mit einer Steuerungseinrichtung (54), welche dazu ausgebildet ist, aus einer eine Vielzahl von Funktionsbausteinen (58) enthaltenden Funktionsbibliothek (56) Funktionsbausteine (58) auszuwählen, welche jeweiligen Komponenten des Kältemittelkreises (10) zugeordnet sind,
**dadurch gekennzeichnet, dass**
die Steuerungseinrichtung (54) dazu ausgebildet ist, für das Betreiben des Kältemittelkreises (10) lediglich diejenigen in der Funktionsbibliothek (56) enthaltenen Funktionsbausteine (58) zu aktivieren, welche in dem zu betreibenden Kältemittelkreis (10) tatsächlich vorhandenen Komponenten und/oder tatsächlich vorgesehenen Verschaltungsmöglichkeiten des Kältemittelkreises (10) zugeordnet sind, und diejenigen in der Funktionsbibliothek (56) enthaltenen Funktionsbausteine (58) zu deaktivieren, welche optional verwendbaren, aber in dem zu betreibenden Kältemittelkreis (10) nicht vorhandenen Komponenten und/oder im Betrieb des Kältemittelkreises (10) nicht vorgesehenen Verschaltungen des Kältemittelkreises (10) zugeordnet sind.

## Claims

1. Method for operating a coolant circuit (10) for a motor vehicle (12), in which a control apparatus (54) selects function modules (58) from a function library (56) containing a plurality of function modules (58), which function modules are assigned to respective components of the coolant circuit (10),
**characterized in that**
the control apparatus (54) for operating the coolant circuit (10) activates only those function modules (58) contained in the function library (56) which are assigned to the components actually present in the coolant circuit (10) to be operated and/or the actual connection options provided for the coolant circuit (10), and deactivates those function modules (58) contained in the function library (56) which are assigned to optionally usable components not present in the coolant circuit (10) to be operated and/or to connections of the coolant circuit (10) not provided in the operation of the coolant circuit (10).

2. Method according to claim 1,
**characterized in**
**that** during the operation of the coolant circuit (10), values are processed by the function modules (58) activated by the control apparatus (54), which values take into account properties of a coolant actually present in the coolant circuit (10).

3. Method according to any one of the preceding claims,
**characterized in that**
the control apparatus (54) activates a function module (58) for operating the coolant circuit (10), which function module is assigned to a coolant reservoir (34) arranged on a low-pressure side of the coolant circuit (10).

4. Method according to any one of the preceding claims,
**characterized in that**
the control apparatus (54) for operating the coolant circuit (10) activates a function module (58) which is assigned to an internal heat exchanger (18) of the coolant circuit (10).

5. Method according to any one of the preceding claims,
**characterized in that**
the function library (56) provides respective function modules (58) for operating the coolant circuit (10) with a coolant exhibiting subcritical states, a coolant exhibiting supercritical states, and a coolant exhibiting transitions between a subcritical state and a supercritical state.

6. Method according to claim 5,
**characterized in that**
the control apparatus (54) activates only at least one of these function modules (58) which is assigned to the actual states of the coolant used in the coolant circuit (10).

7. Method according to claim 5 or 6,
**characterized in that**
an ambient temperature is taken into account when the coolant used in the coolant circuit (10) is brought into the respective state.

8. Method according to any one of the preceding claims,
**characterized in that**
the function library (56) contains respective function modules (58) which indicate an operating mode of respective evaporators (20, 26), wherein the control apparatus (54) activates only at least one of these function modules (58) which is assigned to at least one evaporator (20, 26) actually present in the coolant circuit (10).

9. Method according to any one of the preceding claims,
**characterized in that**
the function library (56) contains a first function module (58) which is assigned to a heat exchanger that uses an air flow as a heat source in a heat pump mode of the coolant circuit (10), and contains a second function module (58) which is assigned to a further heat exchanger, which, in a heat pump mode of the coolant circuit (10), uses a coolant flow (30) as a heat source, wherein the control apparatus (54) activates only at least one of these function modules (58) which is assigned to at least one heat exchanger actually present in the coolant circuit (10) and using the heat source in heat pump mode.

10. Motor vehicle with a coolant circuit (10) and a control apparatus (54) which is configured to select function modules (58) from a function library (56) containing a plurality of function modules (58) which are assigned to respective components of the coolant circuit (10),
**characterized in that**
the control apparatus (54) is configured to activate only those function modules (58) contained in the function library (56) for operating the coolant circuit (10) which function modules are assigned to components actually present in the coolant circuit (10) to be operated and/or to actually present connection options of the coolant circuit (10), and to deactivate those function modules (58) contained in the function library (56) which are assigned to optionally usable components not present in the coolant circuit (10) to be operated and/or to connections of the coolant circuit (10) which are not provided in the operation of the coolant circuit (10).

## Revendications

1. Procédé de fonctionnement d'un circuit de refroidissement (10) pour un véhicule automobile (12), pour lequel un dispositif de commande (54) sélectionne des modules fonctionnels (58), à partir d'une bibliothèque de fonctions (56) contenant une pluralité de modules fonctionnels (58), modules qui sont associés aux composants respectifs du circuit de refroidissement (10),
**caractérisé en ce que**
le dispositif de commande (54) active pour le fonctionnement du circuit de refroidissement (10) juste les modules fonctionnels (58) contenus dans la bibliothèque de fonctions (56) qui sont associés, dans le circuit de refroidissement (10) à faire fonctionner, à des composants réellement présents et/ou à des possibilités de câblage réellement prévues du circuit de refroidissement (10), et désactive les modules fonctionnels (58) contenus dans la bibliothèque de fonctions (56) qui sont associés à des composants réutilisables éventuellement mais non présents dans le circuit de refroidissement (10) à faire fonctionner et/ou à des câblages du circuit de refroidissement (10) non prévus lors du fonctionnement du circuit de refroidissement (10).

2. Procédé selon la revendication 1,
**caractérisé en ce que**
lors du fonctionnement du circuit de refroidissement (10), des valeurs, qui tiennent compte des propriétés d'un réfrigérant présent réellement dans le circuit de refroidissement (10), sont traitées par les modules fonctionnels (58) activés par le dispositif de commande (54).

3. Procédé selon l'une quelconque des revendications précédentes,
**caractérisé en ce que**
un module fonctionnel (58), qui est associé à un accumulateur de réfrigérant (34) agencé sur un côté basse pression du circuit de refroidissement (10), est activé par le dispositif de commande (54) pour le fonctionnement du circuit de refroidissement (10).

4. Procédé selon l'une quelconque des revendications précédentes,
**caractérisé en ce que**
un module fonctionnel (58), qui est associé à un échangeur de chaleur (18) intérieur du circuit de refroidissement (10), est activé par le dispositif de commande (54) pour le fonctionnement du circuit de refroidissement (10).

5. Procédé selon l'une quelconque des revendications précédentes,
**caractérisé en ce que**
des modules fonctionnels (58) respectifs sont mis à disposition par la bibliothèque de fonctions (56) pour le fonctionnement du circuit de refroidissement (10) avec un réfrigérant présentant des états sous-critiques, un réfrigérant présentant des états sur-critiques et un réfrigérant présentant des transitions entre un état sous-critique et un état surcritique.

6. Procédé selon la revendication 5,
**caractérisé en ce que**
juste l'au moins un de ces modules fonctionnels (58) est activé par le dispositif de commande (54), module qui est associé aux états survenant réellement du réfrigérant utilisé dans le circuit de refroidissement (10).

7. Procédé selon la revendication 5 ou 6,
**caractérisé en ce que**
une température ambiante est prise en considération lors d'un passage du réfrigérant utilisé dans le circuit de refroidissement (10) dans l'état respectif.

8. Procédé selon l'une quelconque des revendications précédentes,
**caractérisé en ce que**
la bibliothèque de fonctions (56) contient des modules fonctionnels (58) respectifs qui indiquent un mode de fonctionnement d'évaporateurs (20, 26) respectifs, dans lequel juste l'au moins un de ces modules fonctionnels (58) est activé par le dispositif de commande (54), module qui est associé à au moins un évaporateur (20, 26) réellement présent dans le circuit de refroidissement (10).

9. Procédé selon l'une quelconque des revendications précédentes,
**caractérisé en ce que**
la bibliothèque de fonctions (56) contient un premier module fonctionnel (58) qui est associé à un échangeur de chaleur qui utilise un courant d'air comme source de chaleur dans un fonctionnement de pompe à chaleur du circuit de refroidissement (10), et un second module fonctionnel (58) qui est associé à un autre échangeur de chaleur qui utilise un courant de réfrigérant (30) comme source de chaleur dans un fonctionnement de pompe à chaleur du circuit de refroidissement (10), dans lequel juste l'au moins un de ces modules fonctionnels (58) est activé par le dispositif de commande (54), module qui est associé au moins à un échangeur de chaleur présent réellement dans le circuit de refroidissement (10) et utilisant la source de chaleur lors du fonctionnement de pompe à chaleur.

10. Véhicule automobile avec un circuit de refroidissement (10) et avec un dispositif de commande (54) qui est formé afin de sélectionner, à partir d'une bibliothèque de fonctions (56) contenant une pluralité de modules fonctionnels (58), des modules fonctionnels (58) qui sont associés aux composants respectifs du circuit de refroidissement (10),
**caractérisé en ce que**
le dispositif de commande (54) est formé afin d'activer pour le fonctionnement du circuit de refroidissement (10) juste les modules fonctionnels (58) contenus dans la bibliothèque de fonctions (56) qui sont associés dans le circuit de refroidissement (10) à faire fonctionner à des composants réellement présents et/ou des possibilités de câblage réellement prévues du circuit de refroidissement (10), et désactiver les modules fonctionnels (58) contenus dans la bibliothèque de fonctions (56) qui sont associés à des composants réutilisables éventuellement mais non présents dans le circuit de refroidissement (10) à faire fonctionner et/ou à des câblages du circuit de refroidissement (10) non prévus lors du fonctionnement du circuit de refroidissement (10).
